# EUROPÄISCHE PATENTSCHRIFT

(11) **EP 3 891 881 B1**
(45) Veröffentlichungstag und Bekanntmachung des Hinweises auf die Patenterteilung: **15.02.2023**
(21) Anmeldenummer: 20707022.8
(22) Anmeldetag: 19.02.2020
(51) Int. Cl.: H02P 5/747

(54) **VERFAHREN ZUM BETRIEB EINES ZUMINDEST ZWEI MECHANISCH GEKOPPELTE ASYNCHRONMOTOREN UMFASSENDEN SYSTEMS, COMPUTER-PROGRAMM MIT EINER IMPLEMENTATION DES VERFAHRENS UND NACH DEM VERFAHREN ARBEITENDES SYSTEM**
METHOD FOR OPERATING A SYSTEM COMPRISING AT LEAST TWO MECHANICALLY COUPLED ASYNCHRONOUS MOTORS, COMPUTER PROGRAM WITH AN IMPLEMENTATION OF THE METHOD AND SYSTEM OPERATING ACCORDING TO THE METHOD
PROCÉDÉ DE FONCTIONNEMENT D'UN SYSTÈME COMPRENANT AU MOINS DEUX MOTEURS ASYNCHRONES COUPLÉS MÉCANIQUEMENT, PROGRAMME INFORMATIQUE DOTÉ D'UNE MISE EN OEUVRE DU PROCÉDÉ ET SYSTÈME FONCTIONNANT SELON LEDIT PROCÉDÉ

(30) Priorität: 21.02.2019 EP 19158479
(43) Veröffentlichungstag der Anmeldung: 13.10.2021
(73) Patentinhaber: Siemens Aktiengesellschaft, 80333 München (DE)
(72) Erfinder: FRITSCH, Christoph, 96178 Pommersfelden (DE); RUPPRECHT, Stefan, 92353 Postbauer-Heng (DE); STREUBUEHR, Martin, 90513 Zirndorf (DE); WEDEL, Bernd, 91096 Möhrendorf (DE)
(86) Internationale Anmeldenummer: PCT/EP2020/054281
(87) Internationale Veröffentlichungsnummer: WO 2020/169631

(56) Entgegenhaltungen:
- EP-A1- 3 306 803
- DE-A1- 2 845 952
- US-B2- 7 327 111
- WANG AIMENG ET AL: "An accurate active power sharing study in virtual flux angle droop method", IECON 2017 - 43RD ANNUAL CONFERENCE OF THE IEEE INDUSTRIAL ELECTRONICS SOCIETY, IEEE, 29. Oktober 2017 (2017-10-29), Seiten 756-761, XP033279636, DOI: 10.1109/IECON.2017.8216131

## Beschreibung

Verfahren zum Betrieb eines zumindest zwei mechanisch gekoppelte Asynchronmotoren umfassenden Systems, Computerprogramm mit einer Implementation des Verfahrens und nach dem Verfahren arbeitendes System.

Die Erfindung betrifft ein Verfahren zum Betrieb eines zumindest zwei mechanisch gekoppelte Asynchronmotoren umfassenden Systems, ein Computerprogramm mit einer Implementation des Verfahrens und ein nach dem Verfahren arbeitendes System. Die zumindest zwei mechanisch gekoppelten Asynchronmotoren werden im Folgenden mitunter auch nur kurz als Motoren bezeichnet.

Als Typ der Motoren ist stets der Typ des Asynchronmotors (andere Bezeichnung: Asynchronmaschine, Induktionsmotor, Induktionsmaschine) mitzulesen. Die Motoren können auf beliebige Weise mechanisch gekoppelt sein, z.B. Mehrwicklungsmotoren, mehrere Teilmotoren in einem Motorgehäuse, Motoren auf der gleichen Welle, Motoren, die auf ein Getriebe arbeiten, Motoren, die über ein Werkstück gekoppelt sind, und so weiter.

Mechanisch gekoppelte Asynchronmotoren bringen ihre individuelle Drehmomentwelligkeit als störende Torsionskraft in ein jeweiliges mechanisches System ein. Als Beispiel für ein System mit zumindest zwei mechanisch gekoppelten Asynchronmotoren kann auf einen mittels zweier Asynchronmotoren angetriebenen Querschneider verwiesen werden, bei dem sich durch Torsionskräfte die Schneidmesser mitunter so stark verdrehen, dass es zu deutlichen Qualitätsunterschieden im Schnittbild von zum Beispiel Papier oder Wellpappe kommt. Unabhängig von solchen unerwünschten Qualitätsunterschieden verringern die oszillierenden Torsionskräfte die Lebensdauer der Schneidmesser eines solchen Querschneiders.

Asynchronmotoren besitzen ähnlich wie auch permanent erregte Synchronmotoren eine Welligkeit im Drehmoment. Bei Synchronmotoren werden diese harmonischen Frequenzen der Läuferdrehzahl durch die Nutung des Statorblechs hervorgerufen. Bei Asynchronmotoren treten diese Welligkeiten ebenfalls im Betrieb auf. Sie werden von der aktiven Magnetisierung des Rotors verursacht und hängen vom Flusswinkel und vom Rotorwinkel (Läuferwinkel) ab. Die Welligkeit im Drehmoment verursacht aufgrund der Energieerhaltung auch eine Welligkeit in der Klemmenspannung. Durch eine Messung der Klemmenspannung kann die Welligkeit besonders deutlich sichtbar gemacht werden.

Bei gekoppelten Asynchronmotoren, die jeweils von einem eigenen Umrichter angetrieben werden, bringt jeder Motor seine Drehmomentwelligkeit in das jeweilige mechanische System ein, beispielsweise einen Querschneider, bei dem die beiden rotierenden Schneidmesser (Obermesser, Untermesser) von jeweils einem Motor angetrieben werden. Der Verlauf dieser Welligkeit ergibt sich aufgrund einer Überlagerung der von den einzelnen Motoren stammenden Welligkeiten und hängt von der Lage der individuellen Flusswinkel jedes Motors ab. Die Flusswinkel der beiden Motoren sind aber nicht miteinander korreliert, sondern ergeben sich jeweils aus internen Größen jedes einzelnen Motors, wie zum Beispiel Strom, Spannung und Temperatur. Dies bedeutet, dass eine Differenz der Flusswinkel der Motoren und somit eine Welligkeit des jeweils abgegebenen Drehmoments zum Beispiel von einer Einschaltreihenfolge abhängt und sich während des Betriebs ändert oder zumindest ändern kann.

Eine Differenz im Flusswinkel tritt nur bei der Regelung von Asynchronmaschinen auf. Im Gegensatz zur feldorientierten Regelung von Synchronmaschinen muss hier nicht mit dem absoluten Rotorlagewinkel transformiert werden, sondern es muss eine Relativgeschwindigkeit zwischen Statorfeld und Rotorgeschwindigkeit festgestellt werden. Dies ist die sogenannte Schlupfgeschwindigkeit oder Schlupffrequenz.

Eine gängige Berechnung eines Transformationswinkels eines Asynchronmotors ist die Addition des aktuellen Rotorlagewinkels mit dem Integral der Schlupffrequenz. Die aktuelle Schlupffrequenz berechnet sich aus dem Sollmoment multipliziert mit dem Quotienten aus dem aktuellen Rotorwiderstand bei der geschätzten aktuellen Temperatur und dem Quadrat des Hauptflusses des Motors: ωₛ = Mₛₚₜ Rᵣ/ψ². Da die Größen Rotorwiderstand Rᵣ und Flussistwert ψ Betriebsgrößen der einzelnen Motoren sind, können diese von Antrieb zu Antrieb abweichen.

Das Patentdokument DE 28 45 952 A1 offenbart einen Master-Slave Betrieb von zwei mechanisch gekoppelten Asynchronmotoren, wobei in Bezug auf den als Master fungierenden Asynchronmotor kontinuierlich oder quasi-kontinuierlich ein Motormesswert erfasst und an die Slaves übergeben wird.

Das Patentdokument US 7,327,111 B2 offenbart ebenfalls einen Master-Slave Betrieb von gekoppelten Asynchronmotoren für eine Last, wobei ein mittels Motormodell ermittelter Flusswinkel des Masters an die Slaves übergeben wird, damit die Slave-Antriebe (die ihren Flusswinkel nicht separat regeln) die jeweiligen d/q-Achsen-Referenzspannungen in ein dreiphasiges System überführen können.

Eine Aufgabe der Erfindung besteht darin, ein Verfahren und ein nach dem Verfahren arbeitendes und zumindest zwei mechanisch gekoppelte Asynchronmotoren umfassendes System anzugeben, bei dem auf einfache Art und Weise Drehmomentwelligkeiten vermieden oder zumindest reduziert werden.

Diese Aufgabe wird erfindungsgemäß mittels eines Verfahrens zur Flusswinkelregelung mit den Merkmalen des Anspruchs 1 gelöst. Dazu ist bei einem Verfahren zum Betrieb eines mindestens zwei mechanisch gekoppelte Asynchronmotoren umfassenden Systems, beispielsweise eines Querschneiders, Folgendes vorgesehen: Einer der zumindest zwei Asynchronmotoren wird als Master ausgewählt und fungiert beim Betrieb des Systems als Master. Der oder jeder andere Asynchronmotor fungiert beim Betrieb des Systems als Slave. In Bezug auf den als Master fungierenden Asynchronmotor wird kontinuierlich oder quasi-kontinuierlich ein jeweils wirksamer Flusswinkel als Masterflusswinkel erfasst. Eine Erfassung des Masterflusswinkels bedeutet insbesondere eine messtechnische Erfassung (mittels einer entsprechenden Sensorik), eine Berechnung (zum Beispiel anhand einer Modellrechnung) oder ein Auslesen interner Rechengrößen eines dem Asynchronmotor vorgeschalteten Umrichters. Der erfasste, beim Master wirksame Flusswinkel geht in einen Sollwert für eine Regelung des Flusswinkels des oder jedes Slaves ein. Bei dem oder jedem als Slave fungierenden Asynchronmotor wird der dort wirksame Flusswinkel (Slaveflusswinkel) mittels der Regelung (Flusswinkelregelung) an den Sollwert angepasst.

Die oben genannte Aufgabe wird ebenfalls mittels eines Systems mit zumindest zwei mechanisch gekoppelten Asynchronmotoren gelöst, indem den zumindest zwei mechanisch gekoppelten Asynchronmotoren ein Flusswinkelregler zugeordnet ist, wobei mittels des Flusswinkelreglers zumindest ein Flusswinkel regelbar ist und/oder mittels des Flusswinkelreglers beim Betrieb des Systems zumindest ein Flusswinkel geregelt wird. Der Flusswinkelregler umfasst eine Implementation des hier und im Folgenden beschriebenen Verfahrens, ggf. mit einzelnen oder mehreren bevorzugten, aber grundsätzlich optionalen Ergänzungen, insbesondere Ergänzungen, die weiter unten als bevorzugte Ausführungsformen beschrieben sind. Dem Flusswinkelregler ist durch entsprechende Konfiguration der als Master fungierende Asynchronmotor vorgegeben. Für den oder jeden weiteren Motor des Systems steht damit implizit fest, dass dieser bzw. diese innerhalb des Systems als Slave fungieren und mit der Konfiguration des als Master fungierenden Asynchronmotors liegt damit auch die Konfiguration des oder jedes weiteren Motors als Slave fest. Der Flussregler erfasst bei dem als Master fungierenden Asynchronmotor kontinuierlich oder quasi-kontinuierlich den jeweils wirksamen Flusswinkel als Masterflusswinkel oder dem Flussregler wird der jeweils wirksame Masterflusswinkel zugeführt, ohne dass der Flussregler selbst die Erfassung initiiert oder an der Erfassung beteiligt ist. Mittels des Flussreglers ist also der Masterflusswinkel erfassbar oder dem Flussregler ist der Masterflusswinkel zuführbar. Ebenso erfasst der Flussregler bei dem oder jedem als Slave fungierenden Asynchronmotor kontinuierlich oder quasi-kontinuierlich den dort jeweils wirksamen Flusswinkel (Slaveflusswinkel) oder dem Flussregler wird der jeweils wirksame Slvaveflusswinkel zugeführt, ohne dass der Flussregler selbst die Erfassung initiiert oder an der Erfassung beteiligt ist. Mittels des Flussreglers ist also der Slaveflusswinkel erfassbar oder dem Flussregler ist der Slaveflusswinkel zuführbar. Bezüglich der Erfassung der Flusswinkel (Masterflusswinkel, Slaveflusswinkel) gilt das oben Gesagte und entsprechend umfasst der Begriff "erfassen" insbesondere eine messtechnische Erfassung (mittels einer entsprechenden Sensorik), eine Berechnung (zum Beispiel anhand einer Modellrechnung) oder ein Auslesen interner Rechengrößen eines dem Asynchronmotor vorgeschalteten Umrichters.

Der Masterflusswinkel geht in einen Sollwert für eine Regelung des Slaveflusswinkels des oder jedes Slaves ein. Bei dem oder jedem als Slave fungierenden Asynchronmotor wird der dort wirksame Flusswinkel (Slaveflusswinkel) mittels der Regelungsfunktionalität (Flusswinkelregelung) des Flusswinkelreglers an den Sollwert angepasst; mittels der Regelungsfunktionalität des Flusswinkelreglers ist der Slaveflusswinkel an den auf dem Masterflusswinkel basierenden Sollwert anpassbar.

Der Masterflusswinkel geht in den Sollwert der Flusswinkelregelung ein, indem der Masterflusswinkel als Sollwert für die Flusswinkelregelung übernommen wird (Sollwert = Masterflusswinkel) .

Die oben genannte Aufgabe wird auch mit einer Steuerungseinrichtung zur Steuerung eines mit einem zumindest zwei mechanisch gekoppelte Asynchronmotoren umfassenden System ausgeführten Verfahrens gelöst, wobei die Steuerungseinrichtung nach dem Verfahren wie hier und im Folgenden beschrieben arbeitet und dazu Mittel zur Durchführung des Verfahrens umfasst, insbesondere einen Flusswinkelregler. Das im Folgenden beschriebene Verfahren ist zur automatischen Ausführung bevorzugt in Form eines Computerprogramms (Flusswinkelregelungscomputerprogramm) realisiert; das Flusswinkelregelungscomputerprogramm ist eine Implementierung des gegenständlichen Verfahrens in Software. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Flusswinkelreglers oder des Flusswinkelregelungscomputerprogramms oder unter Kontrolle des Flusswinkelreglers bzw. Flusswinkelregelungscomputerprogramms erfolgen, sofern nicht ausdrücklich darauf hingewiesen ist, dass einzelne Aktionen durch einen Benutzer veranlasst werden. Zumindest bedeutet jede Verwendung des Begriffs "automatisch", dass die betreffende Aktion aufgrund des Flusswinkelreglers oder des Flusswinkelregelungscomputerprogramms oder unter Kontrolle des Flusswinkelreglers bzw. Flusswinkelregelungscomputerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Flusswinkelregelungscomputerprogramm auch andere Implementationsmöglichkeiten, nämlich insbesondere eine Implementation in Firmware oder in Firm- und Software oder in Firm-und Hardware, umfasst sind.

Für die weitere Beschreibung gilt zur Vermeidung unnötiger Wiederholungen, dass Merkmale und Details, die im Zusammenhang mit dem genannten Verfahren zur Flusswinkelregelung sowie eventueller Ausgestaltungen beschrieben sind, selbstverständlich auch im Zusammenhang mit und im Hinblick auf den zur Durchführung des Verfahrens bestimmten Flusswinkelregler oder ein System mit zumindest zwei mechanisch gekoppelten Asynchronmotoren, in dem den gekoppelten Asynchronmotoren ein solcher Flusswinkelregler zugeordnet ist, und umgekehrt gelten. Dementsprechend kann das Verfahren auch mittels einzelner oder mehrerer Verfahrensmerkmale fortgebildet sein, die sich auf von dem Flusswinkelregler ausgeführte Verfahrensschritte beziehen, und der Flusswinkelregler kann entsprechend auch durch Mittel zur Ausführung von im Rahmen des Verfahrens ausgeführten Verfahrensschritten fortgebildet sein, so dass bezüglich der Offenbarung zu den einzelnen Aspekten der Erfindung stets wechselseitig Bezug genommen wird bzw. werden kann.

Der Vorteil der Erfindung und ihrer Ausgestaltungen besteht damit insbesondere darin, dass durch die Regelung des Flusswinkels des oder jedes als Slave fungierenden Motors entsprechend einem Sollwert, welcher auf dem Flusswinkel des als Master ausgewählten Motors basiert, die Flusswinkel der mechanisch gekoppelten Motoren (der Master und der oder jeder Slave sind mechanisch gekoppelt) synchronisiert werden. Als Sollwert der Flusswinkelregelung wird der Flusswinkel des Masters (Masterflusswinkel) verwendet (Sollwert = Masterflusswinkel), damit werden innerhalb des Systems alle untereinander mechanisch gekoppelten Motoren mit demselben oder zumindest im Wesentlichen demselben Flusswinkel betrieben. Wenn als Sollwert der Flusswinkelregelung der Masterflusswinkel und ein vorgegebener oder vorgebbarer Offset (Flusswinkeloffset) verwendet werden (Sollwert = Masterflusswinkel ± Flusswinkeloffset), werden innerhalb des Systems alle untereinander mechanisch gekoppelten Motoren mit Flusswinkeln mit einem konstanten oder zumindest im Wesentlichen konstanten Relativabstand (Winkelabstand, Differenzwinkel) betrieben. Die Synchronisation der Flusswinkel (gleiche oder im Wesentlichen gleiche Flusswinkel; gleiche oder im Wesentlichen gleichbleibende Abstände zwischen den Flusswinkeln) führt zu einer Reduktion von unerwünschten Schwingungen, Schwebungen und dergleichen in einem mechanischen System, welches mittels der miteinander mechanisch gekoppelten und von der Flusswinkelregelung erfassten Motoren angetrieben wird. Die Schwingungen etc. werden dadurch vermieden, dass die Flusswinkelregelung eine Synchronizität der Welligkeiten der von jedem einzelnen Motor in das System eingebrachten Drehmomente bewirkt und das System entsprechend nur synchron "angeregt" wird.

Das erreichte Ergebnis ist eine Synchronisation der Transformationswinkel für den Motorfluss von Slave und Master und eine Kompensation auftretender Unterschiede im Flusswinkel aufgrund der unterschiedlichen Berechnung des Schlupfes. Um dies zu erreichen, wird im Slave der Rotorlagewinkel, welcher vom Master kopiert wird, mit Hilfe einer Flusswinkelregelung korrigiert. Damit wird die Synchronität der Flusswinkel erzwungen.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des Verfahrens zur Flusswinkelregelung, eines Flusswinkelreglers oder eines Systems mit einer Implementation des Verfahrens, insbesondere eines Systems mit einem Flusswinkelregler, nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei dem Verfahren zur Flusswinkelregelung, dem Flusswinkelregler oder dem Flusswinkelregelungscomputerprogramm mit einer Implementation des Verfahrens wird der beim Master wirksame Flusswinkel (Masterflusswinkel) als Sollwert für die Regelung des Flusswinkels des oder jedes Slaves (Slaveflusswinkel) verwendet: Sollwert = Masterflusswinkel. Damit wird erreicht, dass alle untereinander mechanisch gekoppelten Motoren mit demselben oder zumindest im Wesentlichen demselben Flusswinkel und damit auch mit derselben oder zumindest im Wesentlichen derselben Schlupffrequenz betrieben werden.

Bei einer alternativen Ausführungsform des Verfahrens zur Flusswinkelregelung, eines Flusswinkelreglers oder eines Flusswinkelregelungscomputerprogramms mit einer Implementation des Verfahrens etc. ist vorteilhaft vorgesehen, dass der beim Master wirksame Flusswinkel (Masterflusswinkel) zuzüglich eines vorgegebenen oder vorgebbaren Flusswinkeloffsets als Sollwert für die Regelung des Flusswinkels des oder jedes Slaves (Slaveflusswinkel) verwendet wird: Sollwert = Masterflusswinkel ± Flusswinkeloffset). Auch damit wird erreicht, dass alle untereinander mechanisch gekoppelten Motoren mit derselben oder zumindest im Wesentlichen derselben Schlupffrequenz betrieben werden und die untereinander mechanisch gekoppelten Motoren werden mit Flusswinkeln mit gleichbleibendem oder zumindest im Wesentlichen gleichbleibendem Differenzwinkel betrieben. Der aufgrund dieser speziellen Synchronisation der Flusswinkel resultierende Differenzwinkel führt zu einer phasenverschobenen Anregung des mittels der untereinander mechanisch gekoppelten Motoren angetriebenen Systems, nämlich einer Anregung, welche aufgrund der Welligkeiten der von den einzelnen Motoren abgegebenen Drehmomente entsteht. Die phasenverschobene Anregung kann vorteilhaft gezielt zu einer Auslöschung oder zumindest Reduktion von Harmonischen des Drehmoments eingesetzt werden. Insoweit kommt zum Beispiel in Betracht, den Flusswinkeloffset (bei mehr als einem als Slave fungierenden Motor optional auch unterschiedliche Flusswinkeloffsets) auf Basis einer sogenannten Zahnteilung der untereinander mechanisch gekoppelten Motoren vorzugeben, wie dies weiter unten beispielhaft im speziellen Beschreibungsteil erläutert ist.

Bei einer sehr starren Kopplung der Motoren ist es vorteilhaft, die aufgrund der Flusswinkelregelung resultierende Differenz der Flusswinkel der miteinander gekoppelten Motoren durch einen entsprechenden Flusswinkeloffset so zu wählen, dass sich die Drehmomentwelligkeit der Motoren gegenseitig aufhebt oder zumindest im Wesentlichen gegenseitig aufhebt. Eine mit der Zahnteilung der Läuferwicklung korrelierte störende Harmonische im Drehmoment (und ungeradzahlige Vielfache davon), kann zum Beispiel mit einem Flusswinkeloffset entsprechend der halben Zahnteilung kompensiert werden. Anwendungsbeispiele sind Mehrwicklungsmotoren, Segmentmotoren, Motoren mit einer gemeinsamen Welle und dergleichen.

Bei einer elastischen Kopplung zumindest zweier mechanisch miteinander gekoppelter Motoren tritt ein im Vergleich zu einer sehr starren Kopplung gegensätzlicher Effekt auf. Dies ist beispielsweise bei einem Querschneider gegeben, bei dem je ein Schneidmesser von einem der beiden mittels der Schneidmesser mechanisch gekoppelten Motoren angetrieben wird. Hier spielt die absolute Genauigkeit beim Positionieren eine eher untergeordnete Rolle. Entscheidend ist aber, dass es keine Torsionsmomente an den walzenförmigen Schneidmessern sowie zwischen den walzenförmigen Schneidmessern gibt. Hier ist es vorteilhaft, die Motoren hinsichtlich der Flusswinkel so zu synchronisieren, dass diese den zeitlich gleichen Momentenverlauf haben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Querschneider mit zwei mechanisch gekoppelten Asynchronmotoren zum Antrieb der Schneidmesser des Querschneiders und
- FIG 2: eine schematisch noch weiter vereinfachte Darstellung eines Systems mit zwei mechanisch gekoppelten Asynchronmotoren und einem Flusswinkelregler zur Synchronisation der Flusswinkel der von dem System umfassten Asynchronmotoren.

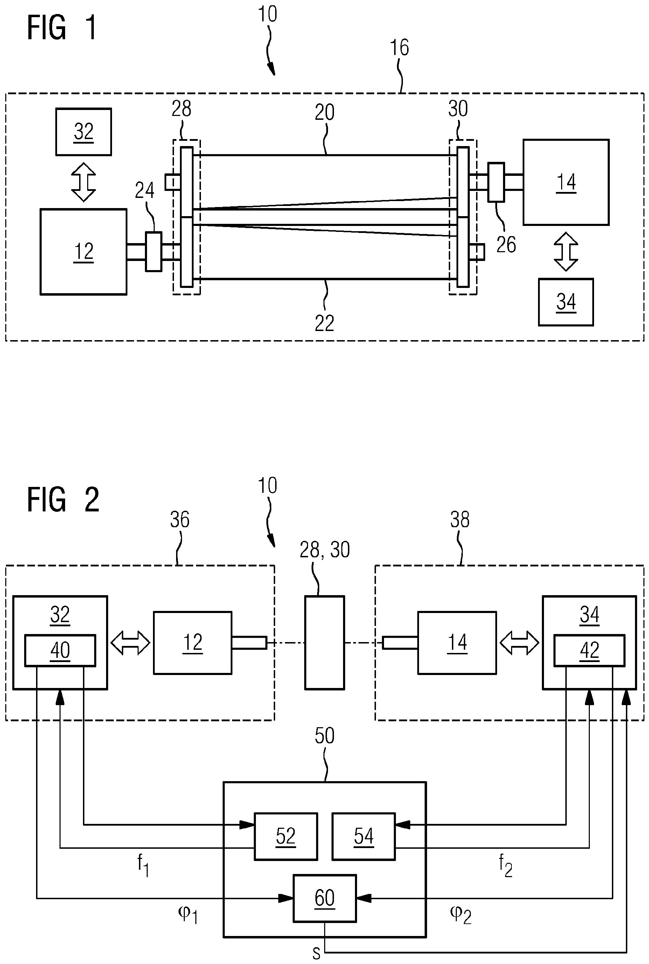

Die Darstellung in FIG 1 zeigt als Beispiel für ein System 10 mit zumindest zwei mechanisch gekoppelten und im Folgenden mitunter auch nur kurz als Motoren 12, 14 bezeichneten Asynchronmotoren 12, 14 einen sogenannten Querschneider 16. Ein Querschneider 16 ist für sich genommen an sich bekannt. Als Schneidvorrichtung fungieren zwei rotierende Schneidmesser 20, 22, nämlich ein sogenanntes Untermesser 20 und ein sogenanntes Obermesser 22. Das Untermesser 20 und das Obermesser 22 rotieren synchron. Dies wird durch entsprechende Drehzahlen der beiden Motoren 12, 14 erreicht. Zwischen den beiden Schneidmessern 20, 22 wird der zu schneidende Gegenstand oder das zu schneidende Gut, zum Beispiel Papier oder Pappe (üblicherweise in Form einer langen Bahn), hindurchgeführt. Beim Schneidvorgang wird - in grundsätzlich an sich bekannter Art und Weise - die Rotationsgeschwindigkeit der Schneidmesser 20, 22 mit einer jeweiligen Vorschubgeschwindigkeit des zu schneidenden Gegenstands bzw. Guts koordiniert.

Auf Details des - grundsätzlich an sich bekannten - Querschneiders 16 kommt es nicht an, vor allem weil die hier vorgeschlagene Neuerung auch für andere Systeme 10 mit zumindest zwei mechanisch gekoppelten Asynchronmotoren 12, 14 in Betracht kommt. Die Darstellung in FIG 1 beschränkt sich entsprechend auf eine schematisch stark vereinfachte Darstellung der beiden rotierenden Schneidmesser 20, 22. Jeder Motor 12, 14 ist mit jeweils einem der Schneidmesser 20, 22 verbunden und insoweit sind eine Achse des jeweiligen Motors 12, 14, in axialer Verlängerung der jeweiligen Motorachse eine Drehachse des jeweiligen Schneidmessers 20, 22 und zwischen einer Motorachse und einer anschließenden Drehachse eines Schneidmessers 20, 22 (grundsätzlich optionale) Kupplungen 24, 26 gezeigt. Die Schneidmesser 20, 22 sind mechanisch miteinander gekoppelt und diese mechanische Kopplung der Schneidmesser 20, 22 bewirkt eine mechanische Kopplung der die Schneidmesser 20, 22 antreibenden Motoren 12, 14.

Als Beispiel für eine mechanische Kopplung 28, 30 der Schneidmesser 20, 22 sind ohne nähere Details dargestellte, miteinander kämmende Zahnräder mit jeweils einer identischen Zahnanzahl an jedem Schneidmesser 20, 22 gezeigt. Bei der gezeigten Situation ist eine solche Kopplung 28, 30 auf beiden Seiten der beiden Schneidmesser 20, 22 gegeben, also auf der Seite, auf welcher einer der beiden Motoren 12 auf das von diesem direkt angetriebene Schneidmesser 22 wirkt und genauso auf der Seite, auf welcher der andere Motor 14 auf das von diesem direkt angetriebene Schneidmesser 20 wirkt.

Ein Antrieb zum Vorschub eines zu schneidenden Gegenstands oder zu schneidenden Guts ist in der Darstellung in FIG 1 nicht gezeigt. Insoweit wird darauf verwiesen, dass ein Querschneider 16 und dessen Koordination mit weiteren Antrieben, insbesondere einem solchen Vorschubantrieb, an sich bekannt ist.

Zum Zwecke einer solchen Koordination ist eine jeweilige Drehgeschwindigkeit jedes Motors 12, 14 üblicherweise vorgebbar, insbesondere für zumindest einen Motor 12, 14 regelbar. Zu diesem Zweck ist jedem Motor 12, 14 ein grundsätzlich an sich bekannter Umrichter 32, 34 zugeordnet und vorgeschaltet. Die Ansteuerung jedes Motors 12, 14 durch den jeweils vorgeschalteten Umrichter 32, 34 ist in der Darstellung in FIG 1 schematisch vereinfacht mittels des zum Motor 12, 14 weisenden Teils des doppelseitigen Blockpfeils gezeigt. Der vom Motor 12, 14 zum Umrichter 32, 34 weisende Teil des doppelseitigen Blockpfeils stellt eine zum Beispiel im Rahmen einer Regelung und für eine Regelung stattfindende Datenerfassung beim Motor 12, 14 und die Übermittlung solcher Daten an den Umrichter 32, 34 dar.

Die weitere Beschreibung wird - ohne Verzicht auf eine weitergehende Allgemeingültigkeit - anhand des Beispiels eines Querschneiders 16 als System 10 mit zumindest zwei mechanisch gekoppelten Motoren 12, 14 (Asynchronmotoren, Induktionsmotoren) fortgesetzt. Die hier vorgeschlagene Neuerung ist aber ausdrücklich nicht auf einen solchen Anwendungsfall beschränkt und entsprechend ist bei jeder Erwähnung eines Querschneiders 16 ein grundsätzlich beliebiges System 10 mit zumindest zwei mechanisch gekoppelten Motoren 12, 14 mitzulesen und bei jeder Erwähnung von spezifischen Einzelheiten eines Querschneiders 16 sollen diese in Bezug auf die Eignung der Neuerung für grundsätzlich beliebige Systeme 10 als nicht geschrieben gelten.

FIG 2 zeigt das System 10 gemäß FIG 1 - oder allgemein ein System 10 mit zumindest zwei mechanisch miteinander gekoppelten (Kopplung 28, 30) Motoren 12, 14 - in einer noch weiter schematisch vereinfachten Darstellung. Die Motoren 12, 14 sind zusammen mit den jeweils vorgeschalteten Umrichtern 32, 34 als Antriebe 36, 38 bezeichnet.

Eine Steuerung, Regelung und/oder Überwachung der Motoren 12, 14 erfolgt mittels einer im Folgenden als Steuerungseinheit 50 bezeichneten Steuerungs- und/oder Überwachungseinheit, die zum Beispiel für jeden Motor 12, 14 bzw. jeden Antrieb 36, 38 einen eigenen Regler 52, 54 (zum Beispiel einen Stromregler) umfasst. Als Steuerungseinheit 50 fungiert zum Beispiel ein Gerät, wie dies von der Anmelderin unter der Bezeichnung Sinumerik, Simotion angeboten wird, oder eine speicherprogrammierbare Steuerung der Anmelderin aus der Typklasse S7 oder ein Gerät mit einer vergleichbaren Funktionalität.

Die Steuerungseinheit 50 ist eine Steuerungseinheit 50 des Querschneiders 16. Bei einem allgemeinen System 10 anstelle eines Querschneiders 16 ist die Steuerungseinheit 50 eine Steuerungseinheit 50 des Systems 10 oder eine Steuerungseinheit 50 der zumindest zwei von dem System 10 umfassten, mechanisch gekoppelten Motoren 12, 14.

Aufgrund einer Stromregelung oder dergleichen - alternativ grundsätzlich aufgrund jeder anderen Art von Regelung: Drehmomentregelung, Drehzahlregelung, Geschwindigkeitsregelung etc. - wird mittels der Steuerungseinheit 50, insbesondere mittels jeweils eines davon umfassten und einem Motor 12, 14 zugeordneten Reglers 52, 54, eine Stellgröße an den jeweiligen Antrieb 36, 38, insbesondere einen jeweiligen Umrichter 32, 34, ausgegeben. Die ausgegebenen Stellgrößen sind in der Darstellung in FIG 2 symbolisch mit f₁ und f₂ bezeichnet und bezeichnen die Frequenz der mittels eines Umrichters 32, 34 erzeugten und an einen jeweils zugeordneten Motor 12, 14 ausgegebenen Phasenspannungen.

Gemäß der hier vorgeschlagenen Neuerung ist vorgesehen, dass bei jedem Antrieb 36, 38, insbesondere bei jedem Motor 12, 14, mittels einer grundsätzlich an sich bekannten Sensorik 44, 46, durch Auslesen interner Rechengrößen des jeweiligen Umrichters 32, 34 oder durch eine Modellrechnung ein beim Betrieb wirkender sogenannter Flusswinkel ϕ₁, ϕ₂ oder ein Maß für einen solchen Flusswinkel erfasst wird. Dafür sind in der Darstellung in FIG 2 zwei mit den Bezugsziffern 40, 42 bezeichnete Funktionseinheiten gezeigt. Diese stellen die unterschiedlichen Erfassungsmöglichkeiten dar und symbolisieren zum Beispiel eine Sensorik, einen Zugriff auf einen Speicher des jeweiligen Umrichters 32, 34 und das dortige Auslesen der Flusswinkel ϕ₁, ϕ₂ oder einen Zugriff auf einen Speicher des jeweiligen Umrichters 32, 34 und eine dortige Modellrechnung sowie das Auslesen der Flusswinkel ϕ₁, ϕ₂ aus den Daten der Modellrechnung.

Gemäß der hier vorgeschlagenen Neuerung ist neben der Erfassung des Flusswinkels oder eines Maßes für den Flusswinkel jedes Motors 12, 14 weiterhin vorgesehen, dass zusätzlich zu zum Beispiel einer Drehzahlregelung wie weiter oben beschrieben eine überlagerte Regelung in Bezug auf den Flusswinkel (Flusswinkelregelung) und/oder eine überlagerte Regelung in Bezug auf den Schlupf stattfindet.

Eine solche Regelung ist beispielsweise ebenfalls als Funktionalität der Steuerungseinheit 50 implementiert. In der Darstellung in FIG 2 ist insoweit beispielhaft als von der Steuerungseinheit 50 umfasste Funktionalität ein zur Unterscheidung als Flusswinkelregler 60 bezeichneter Regler gezeigt. Dieser kann zum Beispiel als PI-Regler oder als PID-Regler implementiert sein. Die Funktion des Flusswinkelreglers 60 ist bevorzugt, aber gleichwohl grundsätzlich optional, in Software implementiert. Dann ist eine solche Software als Computerprogramm 60 in einen Speicher, zum Beispiel einen Speicher der Steuerungseinheit 50, geladen und wird beim Betrieb des Systems 10 mittels einer Verarbeitungseinheit in Form von oder nach Art eines Mikroprozessors, zum Beispiel einer von der Steuerungseinheit 50 umfassten Verarbeitungseinheit, insbesondere einem Mikroprozessor, ASIC oder dergleichen, ausgeführt.

Die Bezugsziffer 60 bezeichnet in der Darstellung in FIG 2 entweder einen in Hardware implementierten Flusswinkelregler 60 oder einen in Software implementierten Flusswinkelregler 60. Ein in Software implementierter Flusswinkelregler 60 wird hier und im Folgenden kurz als Computerprogramm (Flusswinkelregelungscomputerprogramm) 60 bezeichnet, sodass die Bezugsziffer 60 sowohl für den Flusswinkelregler 60 wie auch für ein Computerprogramm 60 mit einer Implementation der Funktion des Flusswinkelreglers 60 verwendet wird.

Bei einer Regelung des Flusswinkels (Flusswinkelregelung) ist vorgesehen, dass einer der zumindest zwei Motoren 12, 14 des Systems 10 als maßgeblicher Motor 12 ausgewählt wird. Der maßgebliche Motor 12 wird im Folgenden als Master 12 bezeichnet. Welcher der zumindest zwei Motoren 12, 14 des Systems 10 als Master 12 ausgewählt wird, ist grundsätzlich beliebig. Der oder jeder andere Motor 14 ist entsprechend ein dem maßgeblichen Motor 12 (Master 12) folgender Motor 14 (Slave 14).

Bei der Regelung des Flusswinkels ist vorgesehen, dass bei dem als Master 12 ausgewählten Motor 12 der dort wirksame Flusswinkel - Masterflusswinkel - kontinuierlich oder quasi-kontinuierlich (Abtastung) erfasst, also insbesondere sensorisch erfasst, berechnet oder ausgelesen (Funktionseinheiten 40, 42), wird und der jeweils wirksame Flusswinkel des Masters 12 als Sollwert für eine Regelung des Flusswinkels des oder jedes Slaves 14 - Slaveflusswinkel - verwendet wird.

Eine solche Regelung des oder jedes Slaveflusswinkels erfolgt mittels des Flusswinkelreglers 60. Dieser erfasst den wirksamen Flusswinkel des Masters 12 und den wirksamen Flusswinkel des oder jedes Slaves 14, verwendet den wirksamen Flusswinkel des Masters 12 als Basis für einen Sollwert einer Regelung sowie den wirksamen Flusswinkel des oder eines Slaves 14 als Istwert der Regelung und gibt eine aufgrund der Regelung resultierende Stellgröße (in der Darstellung in FIG 2 symbolisch mit "s" bezeichnet) an den jeweiligen Slave 14, insbesondere dessen Umrichter 34, aus. Mit den Begriffen Masterflusswinkel und Slaveflusswinkel formuliert, erfasst der Flusswinkelregler 60 den Masterflusswinkel und den oder jeden Slaveflusswinkel, verwendet den Masterflusswinkel als Basis für einen Sollwert einer Regelung sowie den oder jeden Slaveflusswinkel als Istwert jeweils einer Regelung und gibt eine aufgrund der Regelung resultierende Stellgröße s an den jeweiligen Slave 14, insbesondere dessen Umrichter 34, aus.

Bezüglich der Erfassung der Flusswinkel (Masterflusswinkel, Slaveflusswinkel) und der Reichweite des Ausdrucks "Erfassung" wird auf die vorangehenden Erläuterungen sowie die Erläuterungen in der Beschreibungseinleitung verwiesen. Demnach umfasst der Begriff "erfassen" insbesondere eine messtechnische/sensorische Erfassung (mittels einer entsprechenden Sensorik), eine Berechnung (zum Beispiel anhand einer Modellrechnung) oder ein Auslesen interner Rechengrößen eines dem jeweiligen Motor 12, 14 vorgeschalteten Umrichters 32, 34 und die Erfassung erfolgt zum Beispiel mittels der in FIG 2 schematisch vereinfacht gezeigten Funktionseinheiten 40, 42.

Bei einer feldorientierten Regelung eines Asynchronmotors 12, 14 berechnet sich der Flusswinkel aus der aktuellen Rotorlage sowie dem Integral der Schlupffrequenz. Damit ein Asynchronmotor 12, 14 ein Drehmoment erzeugen kann, ist eine Relativgeschwindigkeit zwischen Statorfeld und Rotorlage notwendig. Dies führt zum sogenannten Schlupf und einer Schlupffrequenz. Die feldorientierte Regelung bzw. die sogenannte Park-Transformation kennt keine Geschwindigkeiten. Eine Möglichkeit zur Berechnung des dem Flusswinkel entsprechenden Transformationswinkels besteht in der Berechnung des Transformationswinkels aus dem aktuellem Rotorlagewinkel und dem Integral der Schlupffrequenz (ergibt einen Offsetwinkel) mittels einer Modellrechnung. Bei einer Erfassung des Flusswinkels durch Auslesen interner Rechengrößen eines jeweiligen Umrichters 32, 34 werden beispielsweise der aktuelle Rotorlagewinkel und die Schlupffrequenz (oder direkt das Integral der Schlupffrequenz) ausgelesen und der Flusswinkel daraus berechnet.

Der Flusswinkelregler 60 beeinflusst bei dem oder jedem Slave 14 optional zumindest eine der nachfolgenden Stellgrößen s: Schlupfwinkel, Rotorlagewinkel, Drehmomentensollwert und Magnetisierungsstrom.

Die Regelung des Flusswinkels muss nicht notwendig eine Übereinstimmung des wirksamen Flusswinkels des oder jedes Slaves 14 mit dem wirksamen Flusswinkel des Masters 12 zum Ziel haben. Alternativ kann genauso vorgesehen sein, dass mittels der Regelung ein konstanter Relativabstand zwischen dem wirksamen Flusswinkel des Masters 12 und dem wirksamen Flusswinkel des oder jedes Slaves 14 angestrebt wird. Dann wird bei der Flusswinkelregelung entsprechend nicht der wirksame Flusswinkel des Masters 12 als Sollwert für die Regelung verwendet, sondern vielmehr der um einen vorgegebenen oder vorgebbaren Offset (Flusswinkeloffset) erhöhte oder verringerte wirksame Flusswinkel des Masters 12. Ein eventueller Flusswinkeloffset ist zum Beispiel in Form einer Parametrierung des Flusswinkelreglers 60 oder einer Parametrierung der Steuerungseinheit 50 vorgebbar. Optional kann auch vorgesehen sein, dass ein eventueller Flusswinkeloffset mittels eines Potentiometers oder dergleichen dynamisch verstellbar vorgebbar ist, insbesondere am Flusswinkelregler 60 oder an der Steuerungseinheit 50.

Als Flusswinkeloffset wird bevorzugt ein Wert verwendet, welcher sich aus einer sogenannten Zahnteilung des Stators der Motoren 12, 14 oder eines der Motoren 12, 14 des jeweiligen Systems 10 ergibt. Ein Stator mit drei Polpaaren weist zwölf Wicklungen tragende sogenannte Zähne auf, die in grundsätzlich an sich bekannter Art und Weise äquidistant entlang einer vollständigen Kreislinie verteilt sind. Jeder Zahn hat also zu jedem unmittelbar benachbarten Zahn einen Winkelabstand von genau 30°. Die halbe Zahnteilung bei einer solchen Konfiguration führt zu dem Wert 15° und dieser kann zum Beispiel als Flusswinkeloffset vorgegeben werden. Die Lücken zwischen den Zähnen führen keinen magnetischen Fluss, deshalb entstehen für den magnetischen Fluss ortsabhängige Vorzugslagen, welche Oberwellen im Drehmoment erzeugen. Diese werden durch eine zu der Zahnteilung passende Vorgabe des Flusswinkeloffsets vermieden oder zumindest reduziert.

Mittels einer Regelung des Flusswinkels (Flusswinkelregelung) wird erreicht, dass die Flusswinkel der von dem System 10 umfassten Motoren 12, 14 einen definierten Differenzwinkel haben (gegebenenfalls 0°) - Flusswinkelsynchronisation - und die Motoren 12, 14 somit auch mit der gleichen Schlupffrequenz betrieben werden.

Bei baugleichen Motoren 12, 14 ergibt sich eine unterschiedliche Schlupffrequenz zum Beispiel, wenn der Rotorwiderstand aufgrund von Temperaturunterschieden abweicht. Durch die Synchronisation der Flusswinkel (mittels der Flusswinkelregelung) wird sich bei den von dem System 10 umfassten Motoren 12, 14 ein leicht unterschiedliches Drehmoment einstellen.

Diese Unterschiede können sich entweder selber stabilisieren, weil die Reduktion des Drehmoments dem Temperaturunterschied entgegenwirkt, oder über zusätzliche Maßnahmen, beispielsweise eine Vergrößerung oder Reduzierung des Magnetisierungsstromes, aktiv ausgeregelt werden.

Obwohl die Erfindung im Detail durch das Ausführungsbeispiel näher illustriert und beschrieben wurde, so ist die Erfindung nicht durch das oder die offenbarten Beispiele eingeschränkt. Der Schutzumfang der Erfindung ergibt sich aus den Ansprüchen.

Einzelne im Vordergrund stehende Aspekte der hier eingereichten Beschreibung lassen sich damit kurz wie folgt zusammenfassen: Angegeben werden ein Verfahren zum Betrieb eines zumindest zwei mechanisch gekoppelte Asynchronmotoren 12, 14 umfassenden Systems 10, ein Computerprogramm 60 mit einer Implementation des Verfahrens und ein nach dem Verfahren arbeitendes System 10, wobei bei einem als Master 12 ausgewählten Motor 12 ein dort wirksamer Flusswinkel erfasst wird, als Basis für einen Sollwert einer Regelung des Flusswinkels jedes anderen Motors 14 des Systems 10 verwendet wird und der Flusswinkel jedes anderen Motors 14 im Rahmen der Regelung an den Sollwert angepasst wird.

Anstelle zweier einzelner mechanisch gekoppelter Motoren 12, 14 kommt außerhalb der vorliegenden Erfindung auch ein einzelner Motor mit separaten Wicklungen (Doppelwicklungsmotor) in Betracht. Dann gilt für die beiden Funktionseinheiten des Doppelwicklungsmotors das oben für zwei einzelne Motoren 12, 14 Gesagte entsprechend. Genauso kommt bei einer Verallgemeinerung des hier vorgeschlagenen Ansatzes auf mehr als zwei mechanisch gekoppelte Motoren 12, 14 anstelle der mehreren einzelnen mechanisch miteinander gekoppelten Motoren 12, 14 außerhalb der vorliegenden Erfindung auch ein sogenannter Mehrwicklungsmotor in Betracht. Dann gilt für die Funktionseinheiten eines solchen Mehrwicklungsmotors dasselbe wie für jeweils einzelne mechanisch miteinander gekoppelte Motoren 12, 14 entsprechend.

## Patentansprüche

1. Verfahren zum Betrieb eines mindestens zwei mechanisch gekoppelte Asynchronmotoren (12, 14) umfassenden Systems (10),
wobei einer der zumindest zwei Asynchronmotoren (12, 14) als Master (12) ausgewählt wird und beim Betrieb des Systems (10) als Master (12) fungiert,
wobei der oder jeder andere Asynchronmotor (12, 14) beim Betrieb des Systems (10) als Slave (14) fungiert,
wobei in Bezug auf den als Master (12) fungierenden Asynchronmotor (12, 14) kontinuierlich oder quasi-kontinuierlich ein jeweils wirksamer Flusswinkel als Masterflusswinkel erfasst wird,
wobei der erfasste, beim Master (12) wirksame Flusswinkel in einen Sollwert für eine Regelung des Flusswinkels des oder jedes Slaves (14) eingeht und
wobei der beim Master (12) wirksame Flusswinkel als Sollwert für die Regelung des Flusswinkels des oder jedes Slaves (14) verwendet wird.

2. Verfahren nach Anspruch 1,
wobei der beim Master (12) wirksame Flusswinkel zuzüglich eines vorgegebenen oder vorgebbaren Flusswinkeloffsets als Sollwert für die Regelung des Flusswinkels des oder jedes Slaves (14) verwendet wird.

3. Flusswinkelregelungscomputerprogramm (60) mit Programmcodemitteln, um alle Schritte von jedem beliebigen der Ansprüche 1 oder 2 durchzuführen, wenn das Flusswinkelregelungscomputerprogramm (60) beim Betrieb eines mindestens zwei mechanisch gekoppelte Asynchronmotoren (12, 14) umfassenden Systems (10) für eine Regelung eines Flusswinkels des oder jedes in dem System (10) als Slave (14) fungierenden Asynchronmotors (12, 14) auf Basis eines bei einem in dem System (10) als Master (12) fungierenden Asynchronmotors (12, 14) verwendet wird.

4. Flusswinkelregler (60) zur Synchronisation der Flusswinkel zumindest zweier mechanisch gekoppelter Asynchronmotoren (12, 14),
wobei einer der zumindest zwei Asynchronmotoren (12, 14) als Master (12) ausgewählt wird und beim Betrieb des Flusswinkelreglers (60) als Master (12) fungiert,
wobei der oder jeder andere Asynchronmotor (12, 14) beim Betrieb des Flusswinkelreglers (60) als Slave (14) fungiert,
wobei in Bezug auf den als Master (12) fungierenden Asynchronmotor (12, 14) kontinuierlich oder quasi-kontinuierlich ein jeweils wirksamer Flusswinkel als Masterflusswinkel erfassbar ist und beim Betrieb erfasst wird,
wobei der erfasste, beim Master (12) wirksame Flusswinkel in einen Sollwert für eine Regelung des Flusswinkels des oder jedes Slaves (14) eingeht und
wobei der Flusswinkel des oder jedes Slaves (14) mittels der Regelung an den Sollwert anpassbar ist und beim Betrieb angepasst wird.

5. System (10) mit zumindest zwei mechanisch gekoppelten Asynchronmotoren (12, 14) und mit einem Flusswinkelregler (60), der dazu eingerichtet ist, das Verfahren nach einem der Ansprüche 1 oder 2 auszuführen.

6. System (10) mit zumindest zwei mechanisch gekoppelten Asynchronmotoren (12, 14) und mit einem in einen Speicher des Systems (10) geladenen Flusswinkelregelungscomputerprogramm (60) nach Anspruch 3, wobei das System dazu eingerichtet ist, mittels Verwendung des Flusswinkelregelungscomputerprogramms das Verfahren nach einem der Ansprüche 1 oder 2 auszuführen.

7. System (10) nach Anspruch 5 oder 6 und mit genau zwei mechanisch gekoppelten Asynchronmotoren (12, 14), wobei die beiden Asynchronmotoren (12, 14) ein Untermesser (20) und ein Obermesser (22) eines Querschneiders (16) antreiben.

8. System (10) mit genau einem Mehrwicklungsmotor und einer entsprechend der Anzahl der Wicklungen des Mehrwicklungsmotors mechanisch gekoppelten Anzahl von Funktionseinheiten und mit einem Flusswinkelregler (60), der dazu eingerichtet ist, das Verfahren nach einem der Ansprüche 1 oder 2 auszuführen; oder mit einem in einen Speicher des Systems (10) geladenen Flusswinkelregelungscomputerprogramm (60) nach Anspruch 3, wobei das System dazu eingerichtet ist, mittels Verwendung des Flusswinkelregelungscomputerprogramms das Verfahren nach einem der Ansprüche 1 oder 2 auszuführen.

## Claims

1. Method for operating a system (10) comprising at least two mechanically coupled asynchronous motors (12, 14),
wherein one of the at least two asynchronous motors (12, 14) is selected as master (12) and operates as master (12) during operation of the system (10),
wherein the or any other asynchronous motor (12, 14) operates as slave (14) during operation of the system (10),
wherein with regard to the asynchronous motor (12, 14) functioning as master (12), in each case an effective flux angle is detected as master flux angle in a continuous or quasi-continuous manner,
wherein the detected flux angle effective at the master (12) is included in a setpoint value for regulating the flux angle of the or each slave (14) and
wherein the flux angle effective at the master (12) is used as the setpoint value for regulating the flux angle of the or each slave (14).

2. Method according to claim 1,
wherein the flux angle effective at the master (12) plus a predetermined or predeterminable flux angle offset is used as the setpoint value for regulating the flux angle of the or each slave (14).

3. Flux angle regulation computer program (60) with program code means to perform all steps of any of claims 1 or 2 when the flux angle regulation computer program (60) is used during the operation of a system (10) comprising at least two mechanically coupled asynchronous motors (12, 14) for regulating a flux angle of the or each asynchronous motor (12, 14) functioning as slaves (14) in the system (10) on the basis of an asynchronous motor (12, 14) functioning as master (12) in the system (10).

4. Flux angle regulator (60) for synchronising the flux angle of at least two mechanically coupled asynchronous motors (12, 14),
wherein one of the at least two asynchronous motors (12, 14) is selected as master (12) and functions as master (12) during operation of the flux angle regulator (60),
wherein the or any other asynchronous motor (12, 14) functions as slave (14) during operation of the flux angle regulator (60),
wherein with regard to the asynchronous motor (12, 14) functioning as master (12), in each case an effective flux angle can be detected and is detected as master flux angle during operation in a continuous or quasi-continuous manner,
wherein the detected flux angle effective at the master (12) is included in a setpoint value for regulating the flux angle of the or each slave (14) and
wherein the flux angle of the or each slave (14) can be adjusted by means of the regulation at the setpoint value and is adjusted during operation.

5. System (10) with at least two mechanically coupled asynchronous motors (12, 14) and with a flux angle regulator (60), which is configured to carry out the method according to one of claims 1 or 2.

6. System (10) with at least two mechanically coupled asynchronous motors (12, 14) and with a flux angle regulation computer program (60) loaded into a memory of the system (10) according to claim 3, wherein the system is configured to use the flux angle regulation computer program to carry out the method according to one of claims 1 or 2.

7. System (10) according to claim 5 or 6 and with precisely two mechanically coupled asynchronous motors (12, 14), wherein the two asynchronous motors (12, 14) drive a lower blade (20) and an upper blade (22) of a cross cutter (16).

8. System (10) with precisely one multi-winding motor and a number of functional units mechanically coupled in accordance with the number of windings of the multi-winding motor and with a flux angle regulator (60), which is configured to carry out the method according to one of claims 1 or 2; or with a flux angle regulation computer program (60) loaded into a memory of the system (10) according to claim 3, wherein the system is configured to use the flux angle regulation computer program to carry out the method according to one of claims 1 or 2.

## Revendications

1. Procédé pour faire fonctionner un système (10) comprenant au moins deux moteurs (12, 14) asynchrones accouplés mécaniquement,
dans lequel on sélectionne comme maître (12) l'un des au moins deux moteurs (12, 14) asynchrones et il sert de maître (12) lors du fonctionnement du système (10),
dans lequel l'autre ou chaque autre moteur (12, 14) asynchrone sert d'esclave (14) lors du fonctionnement du système (10),
dans lequel, pour le moteur (12, 14) asynchrone servant de maître (12), on détecte, en continu ou en quasi continu, un angle de flux efficace comme angle de flux maître,
dans lequel l'angle de flux détecté efficace pour le maître (12) entre dans une valeur de consigne d'une régulation de l'angle de flux du ou de chaque esclave (14), et
dans lequel on utilise l'angle de flux efficace pour le maître (12) comme valeur de consigne de la régulation de l'angle de flux du ou de chaque esclave (14).

2. Procédé suivant la revendication 1,
dans lequel on utilise l'angle de flux efficace pour le maître (12) en plus d'un décalage d'angle de flux donné à l'avance ou pouvant l'être comme valeur de consigne de la régulation de l'angle de flux du ou de chaque esclave (14).

3. Programme (60) d'ordinateur de régulation de l'angle de flux, ayant des moyens de code de programme pour effectuer tous les stades de chacune au choix des revendications 1 ou 2, lorsque le programme (60) d'ordinateur de régulation d'angle de flux est utilisé lors du fonctionnement d'un système (10) comprenant au moins deux moteurs (12, 14) asynchrones accouplés mécaniquement, pour une régulation d'un angle de flux du ou de chaque moteur (12, 14) asynchrone servant d'esclave (14) dans le système (10), sur la base d'un moteur (12, 14) asynchrone servant de maître (12) dans le système (10).

4. Régleur (60) d'angle de flux pour la synchronisation de l'angle de flux d'au moins deux moteurs (12, 14) asynchrones accouplés mécaniquement,
dans lequel on sélectionne comme maître (12) l'un des au moins deux moteurs (12, 14) asynchrones et il sert de maître (12) lors du fonctionnement du régleur (60) d'angle de flux,
dans lequel l'autre ou chaque autre moteur (12, 14) asynchrone sert d'esclave (14) lors du fonctionnement du régleur (60) d'angle de flux,
dans lequel, pour le moteur (12, 14) asynchrone servant de maître (12), un angle de flux efficace peut être détecté en continu ou en quasi continu comme angle de flux maître et on le détecte lors du fonctionnement,
dans lequel l'angle de flux détecté efficace pour le maître (12) entre dans une valeur de consigne d'une régulation de l'angle de flux du ou de chaque esclave (14), et
dans lequel on utilise l'angle de flux efficace pour le maître (12) comme valeur de consigne de la régulation de l'angle de flux du ou de chaque esclave (14),
dans lequel l'angle de flux du ou de chaque esclave (14) peut être adapté à la valeur de consigne au moyen de la régulation et on l'adapte lors du fonctionnement.

5. Système (10) comprenant au moins deux moteurs (12, 14) asynchrones accouplés mécaniquement et comprenant un régleur (60) d'angle de flux, qui est conçu pour effectuer le procédé suivant l'une des revendications 1 ou 2.

6. Système (10) ayant au moins deux moteurs (12, 14) asynchrones accouplés mécaniquement et ayant un programme (60) d'ordinateur de régulation du flux suivant la revendication 3 chargé dans une mémoire du système (10), dans lequel le système est conçu pour effectuer le procédé suivant l'une des revendications 1 ou 2 en utilisant le programme d'ordinateur de régulation d'angle de flux.

7. Système (10) suivant la revendication 5 ou 6 et comprenant exactement deux moteurs (12, 14) asynchrones accouplés mécaniquement, dans lequel les deux moteurs (12, 14) asynchrones entraînent un couteau (20) inférieur et un couteau (22) supérieur d'une machine (16) pour la coupe transversale.

8. Système (10) ayant exactement un moteur à plusieurs enroulement et un nombre, couplées mécaniquement correspondant au nombre des enroulements du moteur à plusieurs enroulements, d'unités fonctionnelles et comprenant un régulateur (60) d'angle de flux, qui est conçu pour effectuer le procédé suivant l'une des revendications 1 ou 2 ; ou comprenant un programme (60) d'ordinateur de régulation de l'angle de flux suivant la revendication 3, chargé dans une mémoire du système (10), le système étant conçu pour effectuer le procédé suivant l'une des revendications 1 ou 2, au moyen de l'utilisation du programme d'ordinateur de régulation de l'angle de flux.
